# EUROPÄISCHE PATENTSCHRIFT

(11) **EP 0 678 733 B1**
(45) Veröffentlichungstag und Bekanntmachung des Hinweises auf die Patenterteilung: **18.03.1998**
(21) Anmeldenummer: 94105242.5
(22) Anmeldetag: 05.04.1994
(51) Int. Cl.: G01D 5/16, G01D 5/14

(54) **Magnetische Positionsmesseinrichtung**
Magnetic position measuring system
Système de mesure magnétique de position

(43) Veröffentlichungstag der Anmeldung: 25.10.1995
(73) Patentinhaber: Dr. Johannes Heidenhain GmbH, D-83292 Traunreut (DE)
(72) Erfinder: Tondorf, Sebastian Dr.-Ing., D-83278 Traunstein (DE)

(56) Entgegenhaltungen:
- EP-A- 0 069 392
- DE-B- 1 281 549
- US-A- 3 742 243
- US-A- 4 119 911

## Beschreibung

Die vorliegende Erfindung bezieht sich auf eine Positionsmeßeinrichtung gemäß dem Oberbegriff des Anspruches 1.

Gattungsgemäße Positionsmeßeinrichtungen sind beispielsweise aus den Druckschriften DE 12 81 549 bzw. US 3,742,243 bekannt. Dort ist jeweils offenbart, wie mit Hilfe eines stationär angeordneten Hallelementes die Relativbewegung einer demgegenüber beweglich angeordneten magnetischen Meßteilungs-Struktur erfaßt werden kann. Die vorgesehene magnetische Meßteilungs-Struktur umfaßt zwei zylinderfömige Teile mit einer Zahnstruktur, wobei sich zwischen den gegenüberliegenden, unterschiedlich magnetisierten Zähnen ein magnetisches Feld definierter Orientierung ausbildet. Im Zwischenbereich ist der jeweilige Hallsensor angeordnet, demgegenüber die Meßteilungs-Struktur bewegt wird. Über derart ausgebildete Positionsmeßeinrichtungen ist es nunmehr nicht möglich, eine Auflösung bei der Positionsmessung zu erreichen, die unter den Dimensionen der Lateralabmessung des jeweils verwendeten Hallelementes liegt.

Desweiteren sei auf die DE 28 34 519 A1 hingewiesen. Aus dieser Druckschrift ist eine digitale Längenmeßvorrichtung bekannt, mit zwei relativ zueinander verstellbaren Teilen, von denen einer einen Maßstab und der andere einen Detektor zum Abtasten des Maßstabes und zum Erzeugen elektrischer Signale, die der abgetasteten Länge entsprechen, trägt, und mit einer Elektronik zum Verarbeiten der Detektorsignale, wobei der Maßstab einen Markierungsträger mit magnetisierbarem Material aufweist, welcher in vorbestimmten Abständen zur Bildung von ablesbaren Markierungen magnetisiert ist, und wobei der Detektor ein Lesekopf für die Markierungen ist. Als eine weiterverarbeitende Einrichtung kann dabei eine Digital-Anzeigevorrichtung verwendet werden. Der Markierungsträger kann dabei eine Magnetschicht sein, wobei die Markierungen durch sinusförmige Magnetisierung zweier Spuren gebildet sind, wobei für jede Spur je ein Lesekopf vorhanden ist. Der Detektor kann mindestens einen flußempfindlichen Magnetkopf aufweisen, der zum Lesen bei geringer Relativgeschwindigkeit zwischen Detektor und Markierungsträger nach dem Prinzip eines magentischen Modulators geschaltet ist. Bei der angegebenen Veröffentlichung fehlen detaillierte Angaben über die Ausführung des Detektors vollständig.

Der Erfindung liegt die Aufgabe zugrunde, eine Positionsmeßeinrichtung mit magnetfeldempfindlichen Sensoren zu schaffen, die einfach aufgebaut und verhältnismäßig unempfindlich gegen störende Fremdfelder ist.

Diese Aufgabe wird von einer Positionsmeßeinrichtung mit den Merkmalen des Anspruches 1 gelöst.

Die Vorteile der erfindungsgemäßen Positionsmeßeinrichtung liegen in deren Funktionssicherheit, in dem einfachen Aufbau und in der Möglichkeit, robuste, magnetfeldempfindliche Elemente verwenden zu können und den daraus resultierenden positiven Eigenschaften.

Weitere Vorteile sind:

Bei gleicher Teilungsperiode von Maßstab und Gitter kann der magnetische Fühler länger als die Teilungsperiode ausgebildet werden. Dies ist besonders für kleine Teilungen von Bedeutung.

Bei geeigneter Phasenlage mehrerer Gitter sind mehrere Phasenlagen abzutasten.

Die Wechselwirkungen zwischen Maßstab und Gitter erlauben eine Abtastung des Maßstabs direkt mit magnetempfindlichem Fühler, aber auch indirekt durch Kraftmessung.

Bei unterschiedlicher Teilung von Maßstab und Gitter können weitere Informationen aus der Anordnung gewonnen werden.

Mit Hilfe der Zeichnungen soll anhand von Ausführungsbeispielen die Erfindung noch näher erläutert werden.

Es zeigt
- Figur 1: eine Prinzipdarstellung einer Positionsmeßeinrichtung;
- Figur 2: eine Positionsmeßeinrichtung mit magnetfeldempfindlichen Sensoren;
- Figur 3: eine Positionsmeßeinrichtung mit anderen magnetfeldempfindlichen Sensoren;
- Figur 4: ein Schaubild eines Kraft/Teilungs-Verlaufes;
- Figur 5: eine Anordnung zur Messung eines Abstandes und
- Figur 6: eine Positionsmeßeinrichtung zur Erzeugung eines Referenzimpulses.

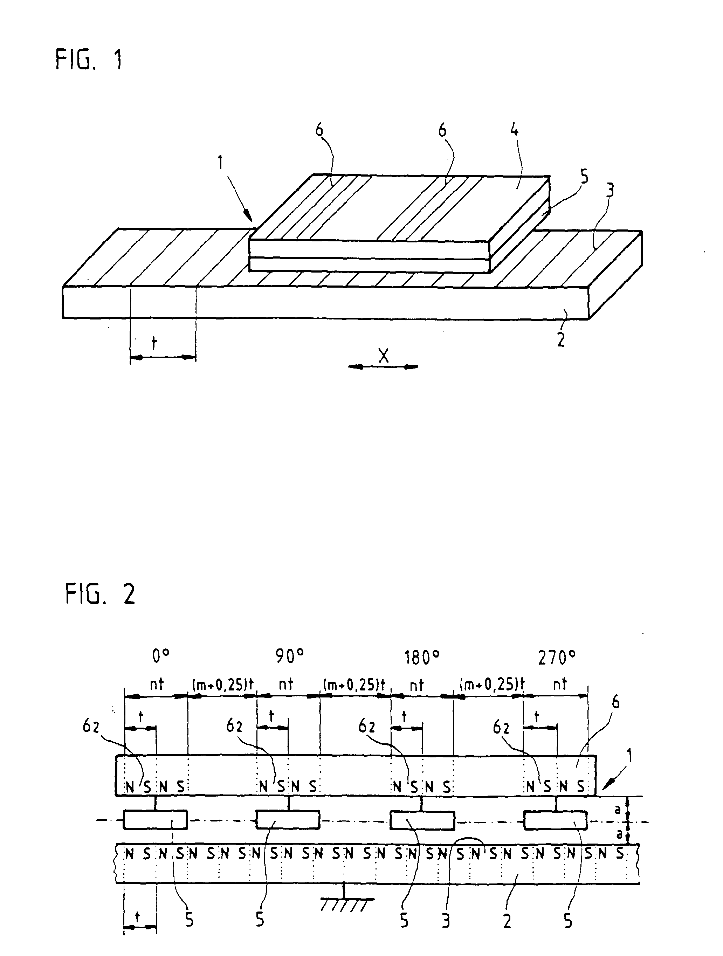

In Figur 1 ist eine Prinzipdarstellung einer magnetischen Längenmeßeinrichtung 1 gezeigt. Die Längenmeßeinrichtung 1 besteht im wesentlichen aus einem Maßstab 2, der eine periodische Meßteilung 3 aufweist, sowie aus einer Abtasteinheit 4 zur Abtastung der Meßteilung 3. Der Maßstab 2 besteht aus magnetischem Material und ist abwechselnd mit gegensätzlicher Feldstärke magnetisiert - daraus bildet sich die periodische Meßteilung 3 mit der Teilungsperiode t. Die Magnetisierung erfolgt längs der Ebene, in der sich der Maßstab 2 erstreckt, kann aber auch senkrecht dazu verlaufen, was hier jedoch nicht gezeigt ist.

Die Magnetisierung erzeugt ein Streufeld, das als Maßstabfeld X bezeichnet werden kann.

Die periodische Meßteilung 3 wird von magnetfeldempfindlichen Elementen 5 abgetastet, die sich in der Abtasteinheit 4 befinden und auf die in der Beschreibung zu den folgenden Figuren noch näher eingegangen wird. Dabei wird als Bezugszeichen eine 5 für das oder die magnetfeldempfindlichen Elemente eingesetzt.

Dem Maßstab 2 mit der magnetisch geteilten Meßteilung 3 liegt die Abtasteinheit 4 gegenüber. Die Abtasteinheit 4 trägt ein magnetisches Gitter 6. Ein magnetisches Gitter ist ein durch Elektro- oder Dauermagneten erzeugtes magnetisches Feld, welches so ausgebildet ist, daß magnetisch geteilte Längen- und Winkel-Meßteilungen mit dessen Hilfe abgetastet werden können.

Die magnetisch geteilte Meßteilung 3 und das magnetische Gitter 6 stehen einander gegenüber.

Zwischen Maßstab 2 und Gitter 6 bildet sich ein resultierendes magnetisches Feld aus den Feldern des Maßstabs 2 und des Gitters 6. Das resultierende Feld kann mit verschiedenen Methoden abgetastet werden.

Ein Ausführungsbeispiel ist in Figur 2 schematisch dargestellt: Ein inkrementales Meßsystem 1 besteht aus einem magnetischen Maßstab 2 mit einer Teilungsperiode t und einem magnetischen Gitter 6 mit gleicher Teilungsperiode t. Maßstab 2 und Gitter 6 stehen sich gegenüber und sind gegeneinander verschiebbar. Je nach der Position des Gitters 6 gegenüber dem Maßstab 2 bildet sich zwischen Gitter 6 und Maßstab 2 ein unterschiedliches magnetisches Feld, das zur Positionsbestimmung herangezogen werden kann.

Die Lageänderung des Meßsystems 1 kann mit verschiedenen Sensoren erfaßt werden, in diesem Beispiel durch vier magnetische Fühler 5 mit quadratischer Kennlinie, die zwischen Maßstab 2 und Gitter 6 gemäß Figur 2 angeordnet sind. Im gezeigten Beispiel sind vier magnetische Fühler 5 gezeigt, die ein 0°, 90°, 180°, 270° Signal erzeugen. Die Fühlerebene befindet sich in der Mitte jeweils im Abstand a zwischen magnetischem Maßstab 2 und magnetischem Gitter 6. Der Maßstab 2 hat eine magnetische Teilung 3, bei der zwei magnetische Nordpole den Abstand t voneinander haben. Das magnetische Gitter 6 ist als ein Dauermagnet ausgebildet, der mit vier Teilungen 6₂ versehen ist. Jede Teilung 6₂ besitzt die gleiche Teilungsperiode t und Feldstärke wie der Maßstab 2 und ist mehrere Teilungsperioden nt lang. Die vier Teilungen 6₂ sind jeweils um (m + 0,25)t Teilungsperioden zueinander verschoben. Dadurch lassen sich vier um 90° verschobene Signale erzeugen, die eine Erkennung der Bewegungsrichtung ermöglichen.

Die magnetischen Fühler 5 sind in Meßrichtung des Maßstabs 2 n-mal länger als die Teilung t der Meßteilung 3.

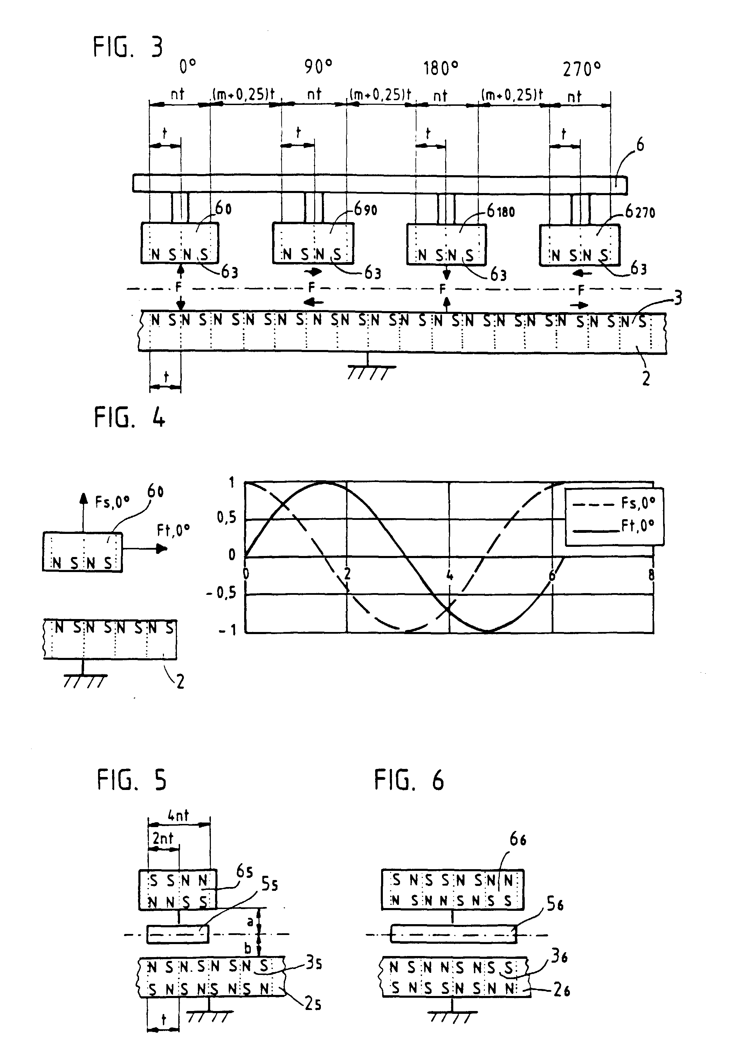

Ein weiteres Ausführungsbeispiel ist in Figur 3 gezeigt. Hier sind vor allem die Fühler anders ausgestaltet. Anstelle der magnetischen Fühler werden hier nicht dargestellte Kraftsensoren zur Positionsbestimmung verwendet. Zwischen dem magnetischen Maßstab 2 und dem magnetischen Gitter 6 entstehen Kräfte F, die zur Positionsbestimmung herangezogen werden können. Figur 3 stellt zum Beispiel eine Anordnung dar, die analog zu der in Figur 2 gezeigten ist. Die magnetischen Fühler gemäß Figur 2 entfallen in diesem Beispiel. Die Kräfte zwischen Maßstab 2 und Gitter 6 sind abhängig von der Lage der Teilungen 3 und 6₃ zueinander eingezeichnet. In der gezeigten Stellung stoßen sich Maßstab 2 und 0°-Gitter 6₀ ab, während das 180°-Gitter 6₁₈₀ angezogen wird. Auf 90°-Gitter 6₉₀ und 270°-Gitter 6₂₇₀ wirken tangentiale Kräfte. Bewegen sich Maßstab 2 und Gitter 6 zueinander, rotiert die Kraft zwischen beiden.

Die Messung zweier Kraftkomponenten an einem der Gitter erlaubt die Bestimmung der Phasenlage der Kraft F. Mit einem Gitter können also zwei um 90° phasenverschobene Signale erzeugt werden, wie in Bild 4 dargestellt. Abstandsänderungen zwischen Maßstab 2 und Gitter 6 haben keine Auswirkungen auf die Phasenlage der Kraft F, sondern ändern nur den Betrag der Kraft F. Das System ist daher in weiten Bereichen unempfindlich gegenüber Abstandsänderungen zwischen Maßstab 2 und Gitter 6. Dies ergibt eine hohe Interpolationsgenauigkeit. Die Bauart der Kraftsensoren ist dabei nicht von Bedeutung.

Bei diesem Schaubild gemäß Figur 4 ist die senkrechte und die tangentiale Komponente des Kraftverlaufes in Abhängigkeit von der Relativposition zwischen Maßstab 2 und Gitter 6 aufgetragen. Hier sind es konkret die Kräfte zwischen Maßstab 2 und 0°-Gitter 6₀, dabei bedeutet, F_{s,0°} Kraft senkrecht zum Maßstab 2, F_{t,0°} Kraft tangential zum Maßstab 2.

In den Figuren 5 und 6 werden weitere Möglichkeiten zur Ausgestaltung der Erfindung gezeigt.

Werden die Teilungen (3₅) von Maßstab 2₅ und Gitter 6₅ unterschiedlich ausgelegt, so ergeben sich eine Reihe von Funktionen, die realisiert werden können. Figur 5 zeigt eine Anordnung zur Messung des Abstands zwischen Maßstab 2₅ und Gitter 6₅ mittels eines magnetischen Sensors 5₅ mit quadratischer Kennlinie. Das Gitter 6₅ hat eine Teilungsperiode von 2nt. Im Mittel ist das Magnetfeld im Fühler 5₅ konstant und nur von der Änderung des Abstands h abhängig.

In Figur 6 ist eine Anordnung zur Erzeugung eines Referenzimpulses gezeigt. Ein Maßstab 2₆ trägt eine pseudo-zufällige Teilung 3₆, die identisch ist mit einer pseudo-zufälligen Teilung 6₆ eines magnetischen Gitters, welches sich in der Abtasteinheit, beispielsweise gemäß Figur 1 befindet. Aus der Technik der opto-elektronischen Positionsmeßeinrichtungen ist eine derartige Ausbildung von Referenzmarken in analoger Weise bekannt. Bei der vorliegenden Erfindung ist im vorgenannten Sinne ein Fühler 5₆ zur Erzeugung des stark überhöhten Referenzimpulses vorgesehen.

## Patentansprüche

1. Positionsmeßeinrichtung zur Messung der Relativlage zweier relativ zueinander beweglicher Objekte, mit einer magnetischen Meßteilung und einer relativ dazu verschiebbaren Abtasteinheit, die mindestens einen Sensor zur Abtastung der magnetischen Meßteilung umfaßt,
dadurch gekennzeichnet,
daß die Abtasteinheit (4) ferner mindestens eine magnetische Teilung (6) in einer festen Relativanordnung zum mindestens einen Sensor (5) trägt, so daß sich zwischen der magnetischen Meßteilung (2) und der magnetischen Teilung (6) der Abtasteinheit (4) ein positionsabhängiges, resultierendes Summenfeld ausbildet, das über den mindestens einen Sensor (5) erfaßbar ist.

2. Positionsmeßeinrichtung nach Anspruch 1, dadurch gekennzeichnet, die Abtasteinheit (4) mehrere Sensoren (5) mit jeweils zugeordneten magnetischen Teilungen (6₂) umfaßt, wobei die Sensoren (5) als auch die ihnen zugeordneten magnetischen Teilungen (6₂) in Meßrichtung (x) beabstandet voneinander angeordnet sind.

3. Positionsmeßeinrichtung nach Anspruch 2, dadurch gekennzeichnet, daß die Abtasteinheit (4) vier Sensoren (5) sowie vier den Sensoren (5) zugeordnete magnetische Teilungen (6₂) umfaßt, wobei die magnetischen Teilungen (6₂) derart gegeneinander verschoben in der Abtasteinheit (4) angeordnet sind, daß vier um 90° phasenverschobene Signale über die Sensoren (5) erzeugbar sind.

4. Positionsmeßeinrichtung nach Anspruch 3, dadurch gekennzeichnet, die magnetischen Teilungen (6₂) in der Abtasteinheit (4) jeweils untereinander die gleiche Teilungsperiode (t) aufweisen als auch die gleiche Teilungsperiode (t) wie die magnetische Meßteilung (2) und jeweils um ein Viertel der Teilungsperiode (t) gegeneinander verschoben angeordnet sind.

5. Positionsmeßeinrichtung nach Anspruch 1, dadurch gekennzeichnet, daß der Sensor (5) ein magnetfeldempfindliches Element ist.

6. Positionsmeßeinrichtung nach Anspruch 5, dadurch gekennzeichnet, daß der Sensor (5) ein magnetoresistives Element ist.

7. Positionsmeßeinrichtung nach Anspruch 5, dadurch gekennzeichnet, daß der Sensor (5) ein Hallelement ist.

8. Positionsmeßeinrichtung nach Anspruch 1, dadurch gekennzeichnet, daß der Sensor (5) ein Element mit quadratischer Kennlinie ist.

9. Positionsmeßeinrichtung nach Anspruch 1, dadurch gekennzeichnet, daß der Sensor ein Kraftsensor ist.

10. Positionsmeßeinrichtung nach Anspruch 2, dadurch gekennzeichnet, daß die Teilungen (3, 6₂) der relativ zueinander beweglichen Elemente die gleiche Teilungsperiode (t) aufweisen.

11. Positionsmeßeinrichtung nach Anspruch 2, dadurch gekennzeichnet, daß die Teilungen (3₅, 6₅) der relativ zueinander beweglichen Elemente ungleiche Teilungsperioden aufweisen.

12. Positionsmeßeinrichtung nach Anspruch 2, dadurch gekennzeichnet, daß die relativ zueinander beweglichen Elemente gleiche, aber unperiodische Teilungen (3₆, 6₆) aufweisen.

13. Positionsmeßeinrichtung nach Anspruch 1, gekennzeichnet durch die Anwendung zur Messung der Relativlage zweier zueinander beweglicher Objekte während einer Rotationsbewegung oder einer Translationsbewegung.

## Claims

1. Position-measuring device for measuring the relative position of two objects movable relative to one another, with a magnetic measurement division and a scanner unit movable relative thereto, which comprises at least one sensor for scanning the magnetic measurement division,
characterised in that
the scanner unit (4) in addition carries at least one magnetic division (6) in a fixed relative arrangement to the at least one sensor (5), so that a position-dependent resultant totalling field is formed between the magnetic measurement division (2) and the magnetic division (6) of the scanner unit (4), said totalling field being detectable via the at least one sensor (5).

2. Position-measuring device according to claim 1,
characterised in that the scanner unit (40 comprises a plurality of sensors (5) with respective associated magnetic divisions (6₂), the sensors (5) and also their associated magnetic divisions (6₂) being spaced apart from one another in the measurement direction (x).

3. Position-measuring device according to claim 2,
characterised in that the scanner unit (4) comprises four sensors (5) and four magnetic divisions (6₂) associated with the sensors (5), the magnetic divisions (6₂) being disposed offset relative to one another in the scanner unit(4) in such a way that four signals, in a phase offsetting of 90°, may be generated via the sensors (5).

4. Position-measuring device according to claim 3,
characterised in that the magnetic divisions (6₂) in the scanner unit (4) respectively have the same division period (t) among themselves, and also the same division period (t) as the magnetic division (2), and are respectively offset to one another by a quarter of the division period (t).

5. Position-measuring device according to claim 1,
characterised in that the sensor (5) is an element sensitive to magnetic fields.

6. Position-measuring device according to claim 5,
characterised in that the sensor (5) is a magnetoresistive element.

7. Position-measuring device according to claim 5,
characterised in that the sensor (5) is a Hall element.

8. Position-measuring device according to claim 1,
characterised in that the sensor (5) is an element with a square characteristic curve.

9. Position-measuring device according to claim 1,
characterised in that the sensor is a power sensor.

10. Position-measuring device according to claim 2,
characterised in that the divisions (3, 6₂) of the elements movable relative to one another have the same division period (t).

11. Position-measuring device according to claim 2,
characterised in that the divisions (3₅, 6₅) of the elements movable relative to one another have unequal division periods.

12. Position-measuring device according to claim 2,
characterised in that the elements movable relative to one another have equal but non-periodic divisions (3₆, 6₆).

13. Position-measuring device according to claim 1,
characterised by the use for measurement of the relative position of two objects movable relative to one another during a rotary movement or a translatory movement.

## Revendications

1. Dispositif de mesure de position pour mesurer la position relative de deux objets mobiles l'un par rapport à l'autre, comportant une échelle de mesure magnétique et une unité de palpage qui peut se déplacer par rapport à celle-ci et comporte au moins un capteur pour palper l'échelle de mesure magnétique, caractérisé par le fait que l'unité de palpage (4) comporte en outre au moins une échelle magnétique (6) montée stationnaire par rapport à au moins un capteur (5) de telle sorte qu'il se forme entre l'échelle de mesure magnétique (2) et l'échelle magnétique (6) de l'unité de palpage (4) un champ cumulé résultant dépendant de la position qui peut être mesuré par le capteur (5) au nombre d'au moins un.

2. Dispositif de mesure de position selon la revendication 1, caractérisé par le fait que l'unité de palpage (4) comporte plusieurs capteurs (5) avec chaque fois des échelles magnétiques (6₂) associées, les capteurs (5) ainsi que les échelles magnétiques (6₂) associées à ceux-ci étant espacés les uns des autres dans la direction de mesure (x).

3. Dispositif de mesure de position selon la revendication 2, caractérisé par le fait que l'unité de palpage (4) comporte quatre capteurs (5) ainsi que quatre échelles magnétiques (6₂) associées auxdits capteurs (5), les échelles magnétiques (6₂) étant décalées les unes par rapport aux autres dans l'unité de palpage (4) de manière à pouvoir produire par l'intermédiaire des capteurs (5) quatre signaux déphasés de 90°.

4. Dispositif de mesure de position selon la revendication 3, caractérisé par le fait que les échelles magnétiques (6₂) dans l'unité de palpage (4) présentent chaque fois la même période de division (t) entre elles ainsi que la même période de division (t) que l'échelle de mesure magnétique (2) et sont décalées chaque fois les unes par rapport aux autres du quart de la période de division (t).

5. Dispositif de mesure de position selon la revendication 1, caractérisé par le fait que le capteur (5) est un élément sensible aux champs magnétiques.

6. Dispositif de mesure de position selon la revendication 5, caractérisé par le fait que le capteur (5) est un élément sensible magnétorésistif.

7. Dispositif de mesure de position selon la revendication 5, caractérisé par le fait que le capteur (5) est un élément de Hall.

8. Dispositif de mesure de position selon la revendication 1, caractérisé par le fait que le capteur (5) est un élément à caractéristique quadratique.

9. Dispositif de mesure de position selon la revendication 1, caractérisé par le fait que le capteur est un capteur de force.

10. Dispositif de mesure de position selon la revendication 2, caractérisé par le fait que les échelles (3, 6₂) des éléments mobiles les uns par rapport aux autres présentent la même période de division (t).

11. Dispositif de mesure de position selon la revendication 2, caractérisé par le fait que les échelles (3, 6₂) des éléments mobiles les uns par rapport aux autres présentent des périodes de division (t) inégales.

12. Dispositif de mesure de position selon la revendication 2, caractérisé par le fait que les éléments mobiles les uns par rapport aux autres présentent des échelles (3, 6₂) identiques mais apériodiques.

13. Dispositif de mesure de position selon la revendication 1, caractérisé par son application à la mesure de la position relative de deux objets mobiles l'un par rapport à l'autre pendant un mouvement de rotation ou un mouvement de translation.
